# EUROPEAN PATENT SPECIFICATION

(11) **EP 1 357 826 B1**
(45) Date of publication and mention of the grant of the patent: **29.03.2006**
(21) Application number: 02704304.1
(22) Date of filing: 31.01.2002
(51) Int. Cl.: A47J 43/18

(54) **APPARATUS FOR COOKING MEAT AND METHODS OF COOKING SAME**
VORRICHTUNG UND VERFAHREN ZUM KOCHEN VON FLEISCH
DISPOSITIF POUR CUIRE DE LA VIANDE ET PROCEDES DE CUISSON

(30) Priority: 31.01.2001 US 774394
(43) Date of publication of application: 05.11.2003
(60) Divisional application: 06001653.2
(73) Proprietor: Innovative Culinary Concepts, LLC, Atlanta, GA 30305 (US)
(72) Inventor: SCHARBO, Ronald, William, Atlanta, GA 30309 (US); MCKERROW, George, C., Jr., Atlanta, GA 30327 (US); SNOKE, Phillip, Jack, Atlanta, GA 30327 (US)
(74) Representative: Frankland, Nigel Howard
(86) International application number: PCT/US2002/002746
(87) International publication number: WO 2002/060303

(56) References cited:
- US-A- 5 301 602
- US-A- 5 893 320
- US-A- 6 125 739

## Description

**THE PRESENT INVENTION** relates to an apparatus for cooking and, more particularly relates to an apparatus for cooking meat.

It has been proposed to provide an apparatus for cooking meat which allows steam from a marinade, or from meat juices, to be applied to the meat during cooking, so as to give the cooked meat an improved flavour.

Over the years, various devices and systems have been developed for cooking meat such as in an oven, on a stove top, over a grill, or open flame. These meats, for example, include beef, lamb, poultry, pork, seafood, and other types of meats. In order to cook these meats, the devices often use either heat from an oven, stove, or grill, or often have their own built-in heat source.

Also, for cooking poultry or fowl and some other types of meats, it is seen to be desirable to marinade and baste the meat for added flavour. Some poultry basting devices take steam from a liquid, possibly the meat liquid itself, water, or a marinade, and direct it into the inner portions of the meat. An example can be seen in U.S. Patent No., 2,821,904 by Arcabosso titled *"Self-Operated Interior Baster For Food Objects".*

More recently, it has become popular to use open cans of beer or lemonade to insert into an inner cavity of a chicken or other fowl when positioned on a grill so that the steam from the heated can of beer or lemonade acts as a marinade to baste or steam the inner cavity of the chicken when roasting. Also, similar canister type devices are shown in U.S. Patent No. 5,893,320 by Demaree titled *"Devices For Cooking Fowl"* and U.S. Patent No. 6,062,131 by Holland titled *"Roasting Stand Adapted To Deliver Flavoured Steam During The Cooking Process".* Nevertheless, without the addition of a drip pan, these devices allow juices and marinade to readily drip or drain from the fowl into the grill or open flames and provide little or no heat control or shielding from the heat. This, in turn, can cause the chicken or other fowl to blacken or char quickly, hurt the taste, make the chicken less appetising, and often not allow for thorough and controlled cooking of the meat.

Document US-A-6125739 discloses an apparatus according to the preamble of independent claim 1.

Additionally, when the canister type devices are positioned into an inner cavity of a fowl, the metal walls of the canister abut against the inner surfaces of the fowl. This leaves little or no space for steam to cook the fowl, and allows the metal walls of the canister to transfer heat to the surfaces of the fowl. Further, openings are also often left at the upper or surrounding lower ends of the cavity so that steam readily escapes or leaves the cavity once it is applied. This can make the cooking process longer and can reduce the flavour because much of the steam, and any marinade flavour associated therewith, is not applied to the meat.

With the foregoing in mind, it is advantageous to use a meat cooking apparatus and method which not only roasts the meat but also enhances exposure of inner surfaces of the meat, such as fowl or poultry, when positioned thereon to the marinade or the flavour of the steam, during cooking. It is advantageous to use a meat cooking apparatus and methods which allow a user to readily use different types of marinades or cooking liquids to enhance cooking of the meat, with steam from the marinade being exposed to inner surfaces of the meat.

The present invention seeks to provide an improved apparatus for cooking meat.

According to one aspect of the present invention, there is provided an apparatus for cooking meat, the apparatus comprising at least one liquid container having at least one opening in a top region thereof for supplying liquid to be contained therein, and at least one meat infusor, the meat infusor including an infusor body having a proximal end portion with a greater circumference than the distal end portion to enhance insertion of the meat infusor into an inner cavity of a fowl to be cooked, the meat infusor also including a plurality of openings positioned in the infusor body so that, when the apparatus is in use, liquid positioned in the liquid container heats to change state from the liquid to a steam, the steam from the liquid container travels through the infusor body, through the openings therein, and toward the inner cavity of the fowl positioned to overlie the infusor body, characterised in that the liquid container is connected to the upper surface of a base, the base including a liquid collecting cavity positioned in the base between the wall of the liquid container and the outer periphery of the base, the meat infusor being associated with the base and being positioned to overlie and substantially surround at least the wall of the liquid container.

Advantageously, the circumference of the distal end portion of the infusor body being such as to enhance closing off of the inner cavity with the proximal end portion when the meat infusor is inserted into the fowl cavity.

Preferably, the infusor body has a substantially dome-type shape, and the meat infusor has a plurality of fin members connected to distal portions of the infusor body and extending outwardly therefrom.

Advantageously, each of the plurality of fin members comprises a relatively thin plate formed integrally with the infusor body, the plurality of fin members being spaced-apart and positioned substantially symmetrically around the infusor body and extending upward from the infusor body when the base is positioned on a horizontally extending cooking surface.

Conveniently, the outer wall of the liquid container forms a wall of the liquid collecting cavity formed in the base, the base including a plurality of handle members associated with outer periphery of the base.

Preferably, the liquid container includes an infusor body seat associated with the outer wall of the liquid container and substantially surrounding the liquid container to seat the infusor thereon substantially to enclose and cover the liquid container.

Advantageously, a meat plug member is provided for insertion into outer surfaces of meat when positioned on the meat infusor and the base to inhibit steam from the meat from readily escaping from a meat cavity.

Conveniently, the infusor operates as a proximal end cavity opening seal and steam passing member positioned to substantially close the proximal end opening of the cavity of the fowl and to allow steam to pass therethrough into the cavity.

In order that the invention may be more readily understood, and so that further features thereof may be appreciated, the invention will now be described, by way of example, with reference to the accompanying drawings, in which:
FIGURE 1 is a perspective view of an apparatus for cooking meat in accordance with the present invention as used in conjunction with a conventional grill,
FIGURE 2 is another perspective view of the apparatus for cooking meat,
FIGURE 3 is a top plan view of the apparatus for cooking meat,
FIGURE 4 is a sectional view of the apparatus for cooking meat taken along line 4-4, as shown in Figure 3,
FIGURE 5 is a bottom perspective view of the apparatus for cooking meat,
FIGURE 6 is an exploded perspective view of a base and an infusor of the apparatus for cooking meat,
FIGURE 7 is an enlarged sectional view of the apparatus for cooking meat taken along line 7-7, as shown in Figure 6 to illustrate the flow path of the steam,
FIGURE 8 is a cut-away perspective view of the apparatus for cooking meat having poultry positioned thereon and positioned on a conventional grill,
FIGURE 9 is a perspective view of the base of the apparatus for cooking meat having a liquid positioned therein and the base being positioned on a stove top for heating the liquid,
FIGURE 10 is a cut-away perspective view of the apparatus for cooking meat including a meat plug member,
FIGURE 11 is a cut-away top plan view of the apparatus for cooking meat having a fowl positioned thereon,
FIGURE 12 is a perspective view of the apparatus for cooking meat having a fowl (shown in phantom) positioned thereon.

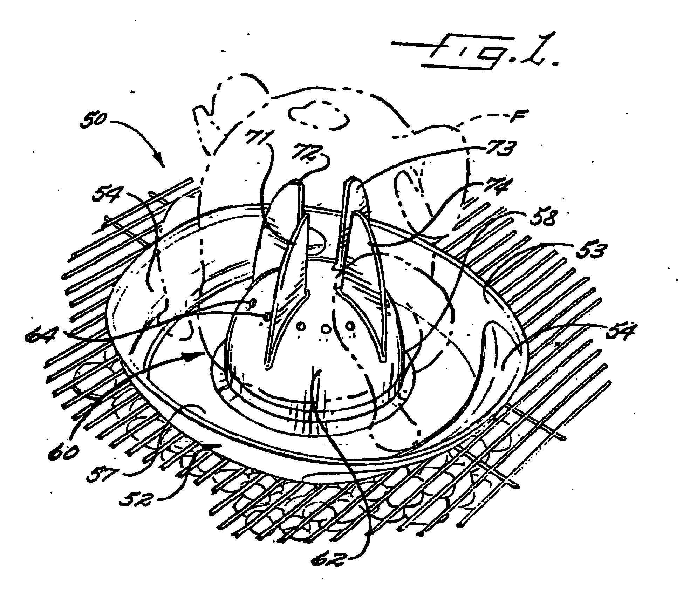

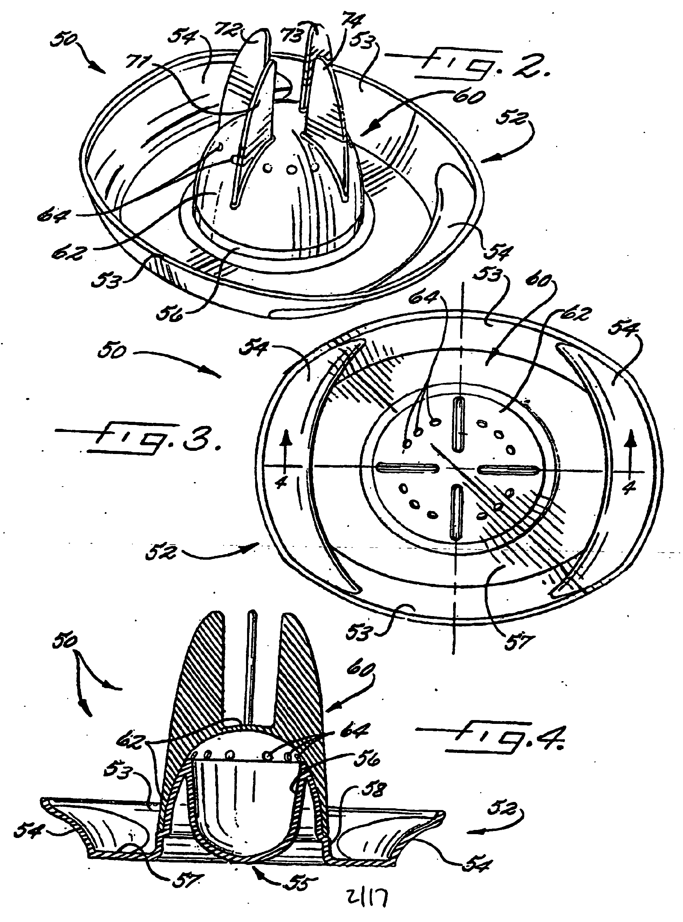

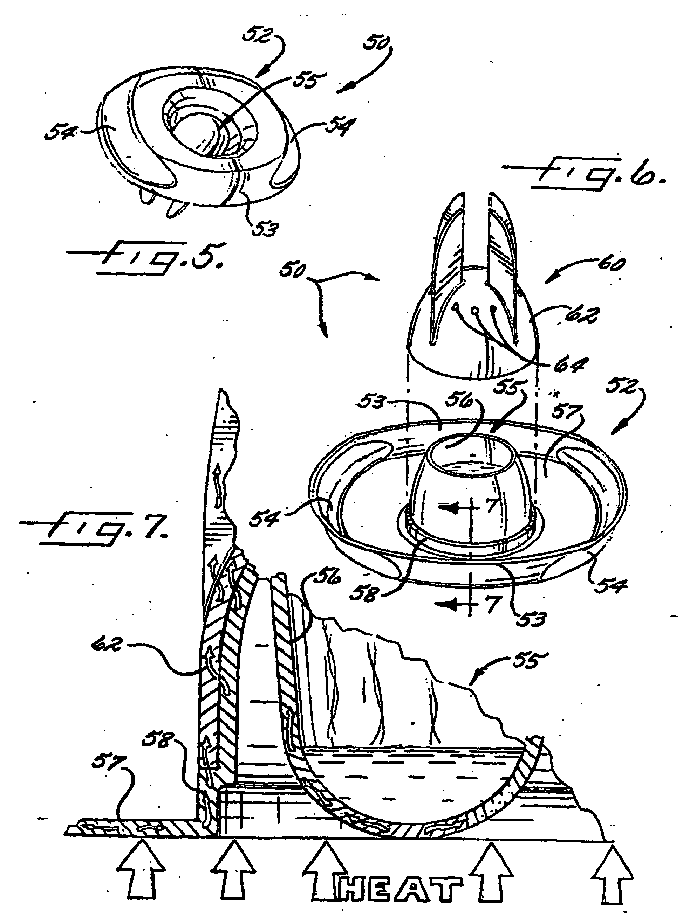

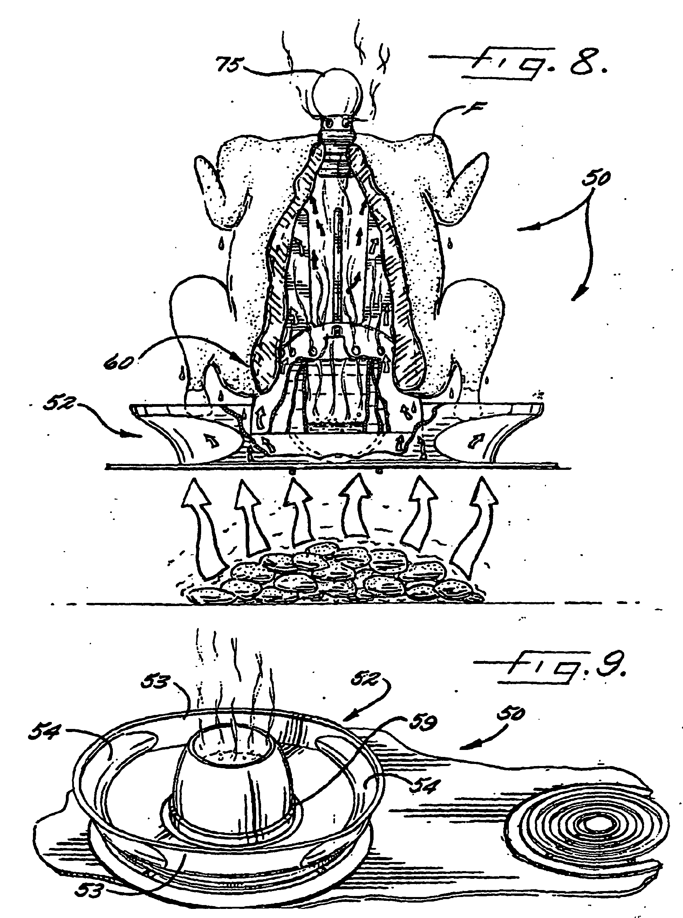

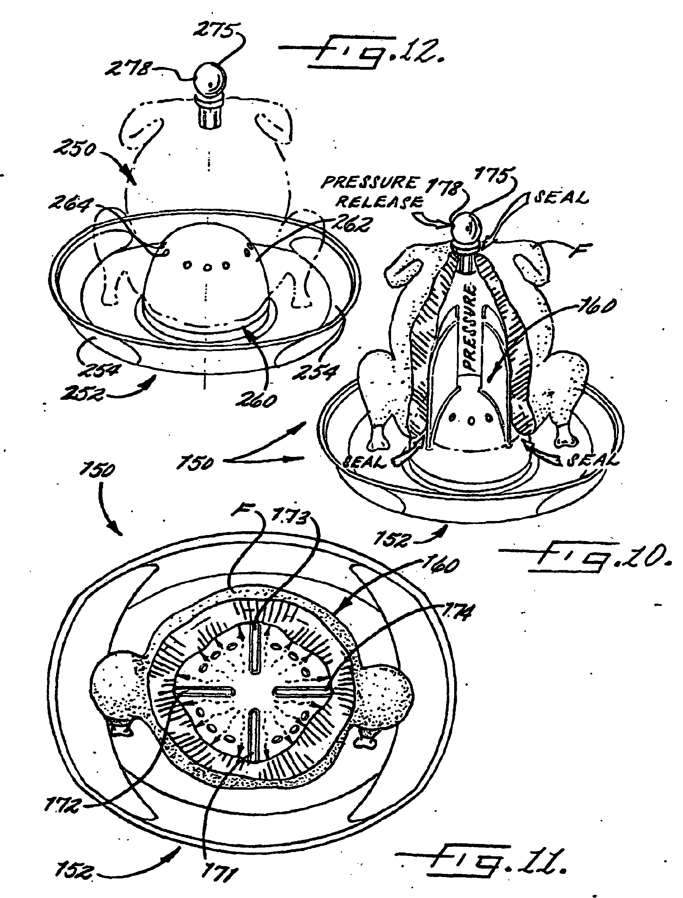

Figures 1 to 9 illustrate an apparatus 50 for cooking meat F which includes a base 52 having at least one liquid container 55 connected to an upper surface 49 of the medial portion of the base 52 and a liquid collecting cavity 57 preferably positioned in the upper surface of the base 52 between wall 56 of the liquid container 55 and outer periphery 53 of the base 52 (see Figures 4 and 6). The wall 56 of the liquid container 55 defines an inner wall 58 of the liquid collecting cavity 57 formed in the base 52. The base 52 has a plurality of handle members 54 associated with outer periphery 53 of the base 52. The handle members 54, for example, can be formed in outer peripheral portions of the base 52 as recessed portions in the base 52 as shown.

The apparatus 50 has at least one separate, and preferably readily detachable, meat infusor 60 positioned to contact the base 52 and to overlie and substantially surround at least the wall 56 of the liquid container 55 (see Figures 1 to 4 and 6 to 7). The meat infusor 60 provides a proximal end cavity opening seal and steam passing member positioned to substantially close the periphery of a proximal end opening of a main inner cavity of a fowl F. This allows steam to pass therethrough to the main inner cavity from the infusor 60 and marinade the fowl F under steam pressure. The meat infusor 60 has an infusor body 62 and a plurality of openings 64 positioned in the side periphery of the infusor body 62 so that when liquid positioned in the liquid container 55 heats, steam from the liquid travels through the infusor body 62, through the openings 64 therein, and toward meat F positioned to overlie the infusor body 62 (see Figures 7 to 9).

As mentioned above, the meat infusor 60 provides a proximal end cavity opening seal and steam passing member positioned to substantially close a proximal end opening of an inner cavity of a fowl F and allow steam to pass therethrough to the inner cavity. The steam passes to the inner cavity from the hot liquid in the liquid container 55 when the base 52 is placed on a heat source such as a grill, stove, or oven as shown. The apparatus 50 has a distal end cavity opening seal member provided by a meat plug member 75 (see Figure 8) positioned to substantially close a distal end opening of the main inner cavity of the fowl F and substantially prevent steam from readily escaping through the distal end opening. This plug member could be a vegetable, e.g. a potato or onion, as well but a tight or vented fit can be used. The sealing of the distal end opening of the main inner cavity of the fowl F provides a steam type pressure to enhance penetration or absorption of flavour, spice, or other characteristics of the marinade into the meat such as the breast meat of poultry.

The liquid container 55 includes an infusor body seat 58 associated with the wall 56 of the liquid container 55 and substantially surrounding the liquid container 55 to seat a lower end of the meat infusor 60 thereon to substantially enclose and cover the liquid container 55. This position allows the infusor body 62 to firmly sit on the liquid container 55 to force or orient the steam upwardly through the infusor body 62 and prevent the steam or boiling liquid from the liquid container 55 to readily travel to other portions of the base 52 without first travelling upwardly through the infusor body 62. Although other sizes and shapes are readily contemplated as would be understood by those skilled in the art, the liquid container 55 holds about 85ml to 114ml of liquid, such as marinades, beer, lemonade, water, other alcoholic liquids, or other liquids which can be quickly heated to become steam for steam cooking the fowl F. On the underside of the liquid container 55, air pockets are located between the inner wall 56 where the liquid is stored and the outer walls which form a peripheral wall for the liquid collected cavity 57 of the base 52 (see Figure 7). This allows heat to surround the area where the liquid is held so that the liquid changes to a steam or vapour state much more quickly by attempting to maximise the exposure of the liquid container 55 to the underlying heat. As will be understood by those skilled in the art, this also allows much greater exposure to fin members 71,72,73,74 as described further herein.

The base 52 of the apparatus 50 surrounds the outer periphery of the meat, e.g. fowl F, when positioned on the meat infusor 60. This position of the base 52 which may be made from stainless steel, aluminium, copper, silver, laminate layers or alloys of metal, or other types of metals, synthetics, or other cooking materials as understood by those skilled in the art with respect to the meat and the meat infusor 60 advantageously provides a shield or protector from direct heat from the heat source so that the meat such as a fowl F is not readily charred. In effect, the base 52 provides protection from open flames or other direct heat and yet easily collects meat and steam drippings from the meat during the cooking process which otherwise often enhance the charring and flame damaging process. The base 52 also provides a platform for cooking vegetables, garnishes, or other products at the same time the meat is cooking both with the roasting process and the marinating or cooking with heated fluid from the fowl F or other meat drippings and steam. The base 52 can also be used as a serving tray for a table, serving counter, or the like.

The infusor body 62 has a proximal end portion with a greater circumference than the distal end portion to enhance insertion of the meat infusor 60 into an inner cavity or a fowl F to be cooked and enhance closing off of or sealing a lower end portion of the inner cavity with the proximal end portion of the infusor body 62 when the meat infusor 60 is inserted into the fowl's main inner cavity. This closing off or sealing of lower end portions or a lower end opening of the main inner cavity of the fowl F, e.g., where the internal organs of the fowl were once located prior to cleaning and/or dressing, is a pressure type seal where outer periphery of the inner cavity of the fowl F touches the outer periphery of the infusor body 62.

Under pressure, i.e. steam pressure, the outer periphery of the inner cavity of the fowl F can give or soften to allow some steam to pass between the respective outer periphery of the inner cavity and the infusor body 62. The closing off of the lower end of the inner cavity can be quite advantageous in cooking the fowl with steam supplied to the inner cavity through more distal portions of the infusor body 62 which extend into the inner cavity. The infusor body 62 has a substantially dome type shape (as shown in Figures 1 to 12).

To further enhance this goal of having a fully closed or substantially closed inner cavity, the meat infusor 62 further includes at least one cavity opening support member 71,72,73,74 connected to and extending outwardly from the infusor body 62 to thereby assist in maintaining the fowl cavity in an open position. This support member or members 71,72,73,74 also provide a heat path for the more distal end portions of the inner cavity to contact, and preferably singe, or otherwise supply heat to these portions of the cavity through these support members 71,72,73,74 (see Figure 7). At least one cavity opening support member 71,72,73,74 is provided by a plurality of fin members connected to distal portions of the infusor body 62 and extending outwardly therefrom. When a fowl F, for example, is positioned on the meat infusor 60, the fin members 71,72,73,74 extend upwardly from a horizontal support surface underlying the base 52. Each of the plurality of fin members 71,72,73,74 can advantageously be provided by a relatively thin plate formed integrally with the infusor body 62 and extending upwardly and/or outwardly therefrom when the base 52 is positioned in a substantially horizontal plane.

## Claims

1. An apparatus (50) for cooking meat, the apparatus (50) comprising a base (52) at least one liquid container (55) having at least one opening in a top region thereof for supplying liquid to be contained therein, and at least one meat infusor (60) associated with the base (52), the meat infusor (60) including an infusor body (62) having a proximal end portion with a greater circumference than the distal end portion to enhance insertion of the meat infusor (60) into an inner cavity of a fowl (F) to be cooked, the meat infusor (60) also including a plurality of openings (64) positioned in the infusor body (62) so that, when the apparatus is in use, liquid positioned in the liquid container (55) heats to change state from the liquid to a steam, the steam from the liquid container (55) travels through the infusor body (62), through the openings (64) therein, and toward the inner cavity of the fowl (F) positioned to overlie the infusor body (62), **characterised in that** the liquid container (55) is connected to the upper surface (49) of the base (52), the base (52) including a liquid collecting cavity (57) positioned in the base (52) between the wall (56) of the liquid container (55) and the outer periphery (53) of the base (52), the meat infusor (60) being positioned to overlie and substantially surround at least the wall (56) of the liquid container (55).

2. An apparatus according to Claim 1, wherein the circumference of the distal end portion of the infusor body (62) being such as to enhance closing off of the inner cavity with the proximal end portion when the meat infusor (60) is, in use of the apparatus, inserted into the fowl cavity.

3. An apparatus according to Claim 1 or Claim 2, wherein the infusor body (62) has a substantially dome-type shape, and the meat infusor (60) has a plurality of fin members (71 to 74) connected to distal portions of the infusor body (62) and extending outwardly therefrom.

4. An apparatus according to Claim 3, wherein each of the plurality of fin members (71 to 74) comprises a relatively thin plate formed integrally with the infusor body (62), the plurality of fin members (71 to 74) being spaced-apart and positioned substantially symmetrically around the infusor body (62) and extending upward from the infusor body (62) when the base (52) is positioned on a horizontally extending cooking surface.

5. An apparatus according to any one of the preceding claims, wherein the outer wall (56) of the liquid container (55) forms a wall of the liquid collecting cavity (57) formed in the base (52), the base (52) including a plurality of handle members (54) associated with outer periphery (53) of the base (52).

6. An apparatus according to any one of the preceding claims, wherein the liquid container (55) includes an infusor body seat (58) associated with the outer wall of the liquid container (55) and substantially surrounding the liquid container (55) to seat the infusor (60) thereon substantially to enclose and cover the liquid container (55).

7. An apparatus according to any one of the preceding claims, wherein a meat plug member (75) is provided for insertion into outer surfaces of meat (F) when positioned on the meat infusor (60) and the base (52) to inhibit steam from the meat F from readily escaping from a meat cavity.

8. An apparatus according to any one of the preceding Claims in combination with a fowl (F) which has a cavity with a proximal end opening, wherein the infusor (60) operates as a proximal end cavity opening seal and steam passing member positioned to substantially close the proximal end opening of the cavity of the fowl (F) and to allow steam to pass therethrough into the cavity.

## Patentansprüche

1. Vorrichtung (50) zum Kochen von Fleisch, wobei die Vorrichtung (50) eine Basis (52), wenigstens einen Flüssigkeitsbehälter (55), der wenigstens eine Öffnung in einem oberen Gebiet desselben zum Zufuhren von darin aufzunehmender Flüssigkeit aufweist, und wenigstens eine mit der Basis (52) verbundene Fleischinfusionseinrichtung (60) umfaßt, wobei die Fleischinfusionseinrichtung (60) einen Infusionskörper (62) mit einem proximalen Endabschnitt mit einem größeren Umfang als der distale Endabschnitt enthält, um Einsetzen der Fleischinfusionseinrichtung (60) in einen inneren Hohlraum eines zu kochenden Geflügels (F) zu verbessern, wobei die Fleischinfusionseinrichtung (60) auch eine Vielzahl von Öffnungen (64) enthält, die in dem Infusionskörper (62) so positioniert sind, daß sich, wenn sich die Vorrichtung im Gebrauch befindet, in dem Flüssigkeitsbehälter (55) positionierte Flüssigkeit erwärmt, um eine Zustandsänderung von der Flüssigkeit in einen Dampf vorzunehmen, wobei der Dampf aus dem Flüssigkeitsbehälter (55) durch den Infusionskörper (62), durch die Öffnungen (64) darin und in Richtung auf den inneren Hohlraum des zum Aufliegen auf dem Infusionskörper (62) positionierten Geflügels (F) strömt, **dadurch gekennzeichnet, daß** der Flüssigkeitsbehälter (55) mit der Oberseite (49) der Basis (52) verbunden ist, wobei die Basis (52) einen Flüssigkeitssammelhohlraum (57) enthält, der in der Basis (52) zwischen der Wand (56) des Flüssigkeitsbehälters (55) und dem Außenrand (53) der Basis (52) positioniert ist, und ferner die Fleischinfusionseinrichtung (60) zum Aufliegen auf und im wesentlichen Umgeben wenigstens der Wand (56) des Flüssigkeitsbehälters (55) positioniert ist.

2. Vorrichtung nach Anspruch 1, **dadurch gekennzeichnet, daß** der Umfang des distalen Endabschnitts des Infusionskörpers (62) derart ist, daß er Absperren des inneren Hohlraums mit dem proximalen Endabschnitt, wenn die Fleischinfusionseinrichtung (60) im Gebrauch der Vorrichtung in den Geflügelhohlraum eingesetzt ist, verbessert.

3. Vorrichtung nach Anspruch 1 oder Anspruch 2, **dadurch gekennzeichnet, daß** der Infusionskörper (62) eine im wesentlichen haubenartige Gestalt aufweist und die Fleischinfusionseinrichtung (60) eine Vielzahl von Lamellenteilen (71 bis 74) aufweist, die mit distalen Abschnitten des Infusionskörpers (62) verbunden sind und sich davon nach außen erstrecken.

4. Vorrichtung nach Anspruch 3, **dadurch gekennzeichnet, daß** jedes der Vielzahl von Lamellenteilen (71 bis 74) eine relativ dünne Platte umfaßt, die mit dem Infusionskörper (62) einteilig ausgebildet ist, wobei die Vielzahl von Lamellenteilen (71 bis 74) voneinander beabstandet und im wesentlichen symmetrisch um den Infusionskörper (62) positioniert ist und sich von dem Infusionskörper (62) nach oben erstreckt, wenn die Basis (52) auf einer sich horizontal erstreckenden Kochfläche positioniert ist.

5. Vorrichtung nach einem der vorangehenden Ansprüche, **dadurch gekennzeichnet, daß** die Außenwand (56) des Flüssigkeitsbehälters (55) eine Wand des in der Basis (52) ausgebildeten Flüssigkeitssammelhohlraums (57) bildet, wobei die Basis (52) eine Vielzahl von Griffteilen (54) enthält, die mit dem Außenrand (53) der Basis (52) verbunden sind.

6. Vorrichtung nach einem der vorangehenden Ansprüche, **dadurch gekennzeichnet, daß** der Flüssigkeitsbehälter (55) einen Infusionskörpersitz (58) enthält, der mit der Außenwand des Flüssigkeitsbehälters (55) verbunden ist und den Flüssigkeitsbehälter (55) im wesentlichen umgibt, um die Infusionseinrichtung (60) darauf zum im wesentlichen Umschließen und Abdecken des Flüssigkeitsbehälters (55) zu setzen.

7. Vorrichtung nach einem der vorangehenden Ansprüche, **dadurch gekennzeichnet, daß** ein Fleischstopfenteil (75) zum Einsetzen in Außenseiten von Fleisch (F) bei Positionierung auf der Fleischinfusionseinrichtung (60) und der Basis (52) vorgesehen ist, um Dampf am leichten Austreten aus einem Fleischhohlraum aus dem Fleisch (F) zu hindern.

8. Vorrichtung nach einem der vorangehenden Ansprüche in Kombination mit einem Geflügel (F), das einen Hohlraum mit einer Öffnung am proximalen Ende aufweist, wobei die Infusionseinrichtung (60) als ein Teil zum Dichten der Öffnung am proximalen Ende des Hohlraums und zum Durchlassen von Dampf fungiert, das so positioniert ist, daß es die Öffnung am proximalen Ende des Hohlraums des Geflügels (F) im wesentlichen verschließt und Dampf dort hindurch in den Hohlraum treten läßt.

## Revendications

1. Appareil (50) pour cuire de la viande, l'appareil (50) comprenant une base (52), au moins un récipient de liquide (55) ayant au moins une ouverture dans sa région supérieure pour verser du liquide destiné à être contenu dans celui-ci, et au moins un infuseur de viande (60) associé à la base (52), l'infuseur de viande (60) comportant un corps d'infuseur (62) ayant une partie d'extrémité proximale avec une circonférence plus grande que la partie d'extrémité distale pour améliorer l'introduction de l'infuseur de viande (60) dans une cavité interne d'une volaille (F) à cuire, l'infuseur de viande (60) comportant également plusieurs ouvertures (64) disposées dans le corps d'infuseur (62) de sorte que, quand l'appareil est en service, du liquide contenu dans le récipient de liquide (65) chauffe pour passer de l'état liquide à un état de vapeur, la vapeur du récipient de liquide (55) traversant le corps d'infuseur (62), par les orifices (64) dans celui-ci, et en direction de la cavité interne de la volaille (F) positionnée pour recouvrir le corps d'infuseur (62),
**caractérisé en ce que** le récipient de liquide (55) est relié à la surface supérieure (49) de la base (52), la base (52) comportant une cavité de collecte du liquide (57) disposée dans la base (52) entre la paroi (56) du récipient de liquide (55) et la périphérie externe (53) de la base (52), l'infuseur de viande (60) étant positionné pour recouvrir et sensiblement entourer au moins la paroi (56) du récipient de liquide (55).

2. Appareil selon la revendication 1, dans lequel la circonférence de la partie d'extrémité distale du corps d'infuseur (62) est telle qu'elle améliore l'isolement de la cavité interne avec la partie d'extrémité proximale quand l'infuseur de viande (60) est introduit dans la cavité de la volaille durant l'utilisation de l'appareil.

3. Appareil selon la revendication 1 ou la revendication 2, dans lequel le corps d'infuseur (62) a une forme sensiblement du type en dôme, et l'infuseur de viande (60) présente une pluralité d'éléments en ailette (71 à 74) reliés aux parties distales du corps d'infuseur (62) et s'étendant vers l'extérieur de celui-ci.

4. Appareil selon la revendication 3, dans lequel chacune de la pluralité des éléments en ailette (71 à 74) comprend une plaque relativement mince formée intégralement avec le corps d'infuseur (62), la pluralité d'éléments en ailette (71 à 74) étant espacés et disposés sensiblement symétriquement autour du corps d'infuseur (62) et s'étendant vers le haut à partir du corps d'infuseur (62), quand la base (52) est disposée sur une surface de cuisson s'étendant horizontalement.

5. Appareil selon une quelconque des revendications précédentes, dans lequel la paroi externe (56) du récipient de liquide (55) forme une paroi de la cavité de collecte de liquide (57) formée dans la base (52), la base (52) comportant une pluralité d'éléments de préhension (54) associés à la périphérie externe (53) de la base (52).

6. Appareil selon une quelconque des revendications précédentes, dans lequel le récipient de liquide (55) comporte un siège de corps d'infuseur (58) associé à la paroi externe du récipient de liquide (55) et entourant sensiblement le récipient de liquide (55) pour poser l'infuseur (60) sur celui-ci sensiblement pour enfermer et couvrir le récipient de liquide (55).

7. Appareil selon une quelconque des revendications précédentes, dans lequel un élément de bouchon (75) pour la viande est prévu pour l'introduction dans des surfaces externes de la viande (F) quand elle est disposée sur l'infuseur de viande (60) et la base (52) pour empêcher la vapeur de la viande (F) de s'évacuer facilement d'une cavité de la viande.

8. Appareil selon une quelconque des revendications précédentes en combinaison avec une volaille (F) qui présente une cavité avec une ouverture d'extrémité proximale, dans lequel l'infuseur (60) fonctionne en tant qu'élément faisant passer de la vapeur et faisant étanchéité avec l'ouverture de la cavité d'extrémité proximale, positionné pour fermer sensiblement l'ouverture d'extrémité proximale de la cavité de la volaille (F) et pour permettre le passage de la vapeur à travers celle-ci dans la cavité.
